# FASCICULE DE BREVET EUROPEEN

(11) **EP 3 912 530 B1**
(45) Date de publication et mention de la délivrance du brevet: **07.06.2023**
(21) Numéro de dépôt: 21174552.6
(22) Date de dépôt: 18.05.2021
(51) Int. Cl.: A47J 37/06, A47J 43/07

(54) **APPAREIL DE CUISSON D'ALIMENTS**
KOCHGERÄT FÜR LEBENSMITTEL
FOOD COOKING APPLIANCE

(30) Priorité: 19.05.2020 FR 2005044
(43) Date de publication de la demande: 24.11.2021
(73) Titulaire: SEB S.A., 69130 Ecully (FR)
(72) Inventeur: ALLEMAND, Bernard, 70100 VELESMES-ECHEVANNE (FR); FRADET, Gautier, 21120 ECHEVANNES (FR); SEURAT, Frédéric, 21490 BRETIGNY (FR)
(74) Mandataire: SEB Développement

(56) Documents cités:
- WO-A1-2012/123464
- WO-A2-2012/007681
- CN-U- 202 341 751
- CN-U- 203 088 817
- CN-U- 205 006 696
- FR-A1- 2 758 072
- FR-A1- 3 029 095
- GB-A- 2 516 243
- US-A1- 2018 035 698

## Description

### Domaine technique de l'invention

La présente invention concerne de manière générale un appareil de cuisson d'aliments, comprenant notamment une pale de brassage d'aliments disposés dans un espace de cuisson.

### État de la technique

Il est connu dans l'art antérieur des appareils de cuisson d'aliments avec pale de brassage, tel que celui divulgué dans le document WO2012/123464A1. En contrepartie, ce système présente notamment l'inconvénient d'être dédié à un seul type de cuisson, ce qui limite les possibilités de préparation d'aliments.

### Exposé de l'invention

Un but de la présente invention est de répondre aux inconvénients de l'art antérieur mentionnés ci-dessus et en particulier, tout d'abord, de proposer un appareil de cuisson qui permette de cuire ou chauffer des aliments de plusieurs manières, pour enrichir la palette des recettes que peut préparer un utilisateur avec un tel appareil.

Pour cela un premier aspect de l'invention concerne un appareil de cuisson d'aliments comprenant :
- un boîtier comprenant un espace de cuisson,
- une cuve de cuisson agencée dans l'espace de cuisson,
- un plateau, agencé dans la cuve de cuisson,
- des moyens de chauffage, agencés pour chauffer des aliments disposés dans l'espace de cuisson,
- une pale de brassage, agencée pour brasser des aliments à préparer disposés dans l'espace de cuisson,
- un palier fixe agencé sur la cuve de cuisson pour supporter et guider en rotation la pale de brassage,
- des moyens d'entraînement, agencés pour entraîner la pale de brassage au travers du palier fixe,
   la cuve de cuisson comprenant un orifice de cuve pour le passage des moyens d'entraînement et/ou de la pale de brassage,
caractérisé :
- en ce que la pale de brassage est agencée pour brasser des aliments disposés sur le plateau,
- en ce que le plateau comprend un orifice de plateau pour le passage des moyens d'entraînement et/ou de la pale de brassage,
- et en ce que l'appareil de cuisson comprend des moyens de blocage en rotation du plateau autour du palier fixe.

L'appareil de cuisson selon la mise en oeuvre ci-dessus comprend un plateau et une pale de brassage agencée pour remuer des aliments disposés sur le plateau. Le plateau est fixe par rapport au boîtier grâce aux moyens d'arrêt en rotation. En conséquence, un espace libre est ménagé sous le plateau, qui peut servir pour stocker de l'eau et donc offrir une possibilité de cuisson vapeur. En outre, on peut aussi prévoir de ne pas monter la pale et/ou de ne pas la mettre en mouvement / rotation, ce qui offre aussi une possibilité supplémentaire de brasser ou de ne pas brasser les aliments reçus sur le plateau. En d'autres termes, au moins quatre modes de cuisson différents peuvent être proposés : avec eau et avec brassage, avec eau et sans brassage, sans eau et avec brassage, sans eau et sans brassage. Il est à noter que les moyens de chauffage sont agencés pour chauffer les aliments directement (par rayonnement par exemple), ou indirectement (par conduction au travers de la cuve de cuisson, ou via un vecteur tel que de l'air ou de la vapeur d'eau).

Avantageusement, l'appareil de cuisson comprend des moyens de blocage en translation du plateau selon une direction axiale du palier fixe. Avantageusement, les moyens de blocage en translation du plateau sont agencés sur ou solidaires du palier fixe.

Avantageusement, le palier fixe est un tube.

Avantageusement, la cuve de cuisson et/ou le plateau et/ou la pale de brassage et/ou le palier fixe est(sont) amovible(s).

Avantageusement, les moyens de blocage en translation comprennent un épaulement sur le palier fixe, et/ou une jupe sur la pale de brassage. En effet, on peut envisager de prévoir le plateau pris en sandwich, au jeu près, entre un épaulement du palier fixe (solidaire et/ou encastré vis-à-vis de la cuve de cuisson ou du boîtier) et une jupe de la pale de brassage (solidaire et retenue par exemple sur les moyens d'entraînement par le biais d'un poussoir à ressort ou d'un montage avec verrou). En conséquence, le plateau ne peut pas être déplacé selon l'axe du palier fixe ou de la pale de brassage.

Avantageusement, les moyens de blocage en rotation du plateau autour du palier fixe sont agencés sur le palier fixe.

Avantageusement, les moyens de blocage en rotation du plateau autour du palier fixe comprennent un index ou une contre forme non circulaire, typiquement agencé(e) pour coopérer avec le plateau. En particulier, on peut prévoir un trou de section non circulaire dans le plateau, qui vient s'engager avec un index ou une forme mâle correspondante du palier fixe.

Avantageusement, l'appareil de cuisson comprend au moins une excroissance ou une saillie destinée à procurer une butée à des aliments reçus sur le plateau et entraînés en mouvement par la pale de brassage. Une telle excroissance ou saillie forme un "arrête frites", et garantit que les aliments sont effectivement brassés / retournés et pas seulement poussés par la pale de brassage.

Avantageusement, ladite au moins une excroissance ou une saillie est agencée sur le plateau. On pourrait en alternative ménager ladite au moins une excroissance ou une saillie sur la cuve, ou même la rendre solidaire, de manière amovible, du boîtier.

Avantageusement, l'appareil de cuisson comprend des moyens de fixation du palier fixe sur la cuve de cuisson et/ou sur le boîtier.

Avantageusement, le palier fixe comprend une première extrémité engagée de manière amovible avec la cuve de cuisson ou le boîtier, selon une liaison du type encastrement, par exemple du type vis/écrou ou quart de tour.

Avantageusement, le palier fixe comprend une deuxième extrémité engagée avec la pale de brassage, par exemple de type liaison pivot, ou pivot glissant.

Avantageusement, les moyens de chauffage sont agencés pour générer un flux d'air de cuisson sur les aliments reçus sur le plateau.

Avantageusement, les moyens de chauffage comprennent des premiers moyens de chauffage agencés pour générer un flux d'air de cuisson sur les aliments reçus sur le plateau et des deuxièmes moyens de chauffage agencés pour chauffer la cuve de cuisson et/ou l'espace ménagé entre le fond de la cuve de cuisson et le plateau par conduction et/ou rayonnement et/ou induction. Une telle mise en oeuvre permet de rendre particulièrement efficace la préparation des aliments en fonction du type de cuisson choisi.

Avantageusement, les premiers moyens de chauffage et les deuxièmes moyens de chauffage sont agencés pour fonctionner de manière distincte et/ou indépendante.

Avantageusement, l'appareil de cuisson comprend des moyens de support du plateau sur le fond de cuve de cuisson. On peut envisager des pieds qui reposent sur le fond de la cuve de cuisson.

Avantageusement, le plateau comprend au moins un passage de communication fluidique entre l'espace ménagé entre le fond de la cuve de cuisson et le plateau et l'espace disposé en regard d'une partie supérieure du plateau. Un tel passage (ou ouverture) de communication fluidique permet par exemple à de la vapeur d'eau (générée sous le plateau), de passer au-dessus du plateau, et cela permet aussi à de l'eau (présente au niveau du plateau) de s'égoutter facilement. On peut prévoir un plateau ajouré, percé, poreux, ou avec un jeu important entre la cuve de cuisson et sa périphérie.

Avantageusement, le fond de la cuve de cuisson est étanche et des moyens d'étanchéité sont agencés entre le palier fixe et le fond de cuve, par exemple un joint torique. On peut prévoir alternativement un joint à lèvres, ou encore un joint plat à comprimer.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] la figure 1 représente une vue en perspective éclatée et simplifiée d'un appareil de cuisson selon la présente invention ;
[fig. 2] la figure 2 représente une coupe détaillée de l'appareil de cuisson de la figure 1, en ordre de fonctionnement ;
[fig. 3] la figure 3 représente un plateau de l'appareil de cuisson de la figure 1
[fig. 4] la figure 4 représente une pale de brassage de l'appareil de cuisson de la figure 1

### Description détaillée de mode(s) de réalisation

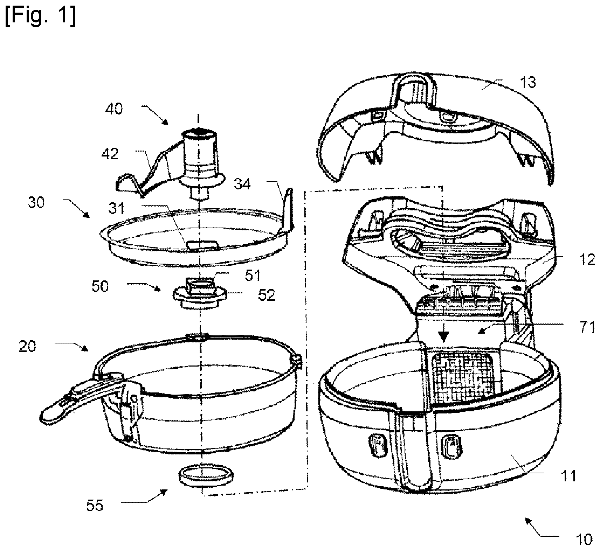

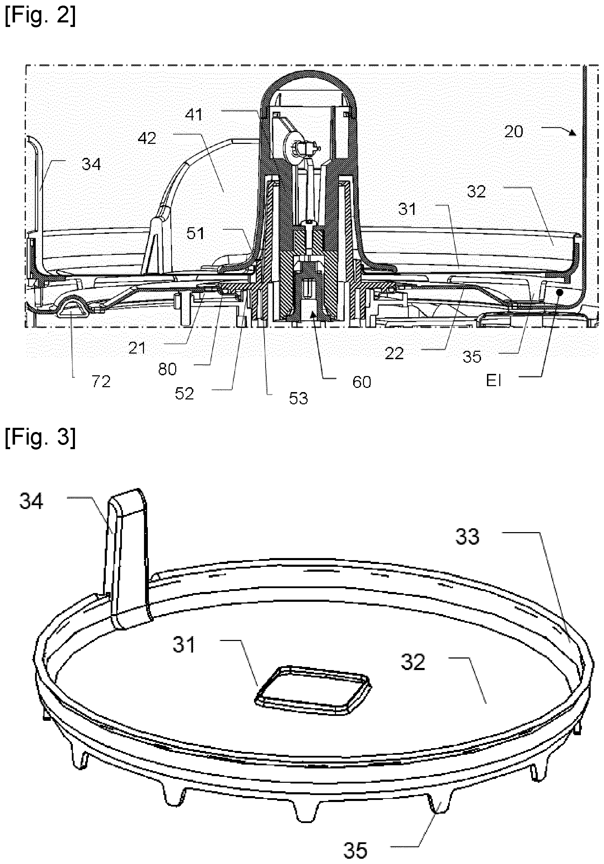

La figure 1 représente une vue éclatée en perspective d'un appareil de cuisson d'aliments selon l'invention, comprenant :
- un boîtier 10 formé par un boîtier inférieur 11 et par un couvercle pivotant, en deux parties 12 et 13, le boîtier 10 comprenant un espace de cuisson,
- une cuve de cuisson 20 agencée dans l'espace de cuisson,
- un plateau 30, agencé dans la cuve de cuisson,
- des moyens de chauffage, agencés pour chauffer des aliments disposés dans l'espace de cuisson,
- une pale de brassage 40, agencée pour brasser des aliments à préparer disposés dans l'espace de cuisson,
- un palier fixe 50 agencé sur la cuve de cuisson pour supporter et guider en rotation la pale de brassage,
- des moyens d'entraînement 60 (visibles figure 2), agencés pour entraîner la pale de brassage 40 au travers du palier fixe 50,
   la cuve de cuisson 20 comprenant un orifice de cuve 21 (visible figure 2) pour le passage des moyens d'entraînement 60 et/ou de la pale de brassage 40,
   le plateau 30 comprenant un orifice de plateau 31 pour le passage des moyens d'entraînement 60 et/ou de la pale de brassage 40.

Comme vu ci-dessus, la pale de brassage 40 est prévue mobile en rotation et comprend un bras de pale 42 pour brasser des aliments disposés sur le plateau 30, une fois ce dernier positionné dans la cuve de cuisson 20. Des moyens de chauffage, et en particulier des premiers moyens de chauffage 71 logés dans le boîtier 10 sont prévus pour pouvoir générer un flux d'air chaud sur les aliments disposés sur le plateau 30. On peut prévoir typiquement un moto-ventilateur pour générer un flux d'air et une résistance chauffante placée dans le flux d'air.

D'une manière générale, le plateau 30 est prévu pour reposer au fond de la cuve de cuisson 20, et y rester statique. A cet effet, le palier fixe 50 assure le positionnement en hauteur du plateau 30 comme on le verra figure 2, mais surtout, le palier fixe 50 est prévu pour procurer un blocage en rotation du plateau 30. A cet effet, des moyens de blocage en rotation sont prévus sur le palier fixe 50 sous la forme d'un carré d'arrêt 51 qui vient se loger dans l'orifice de plateau 31, qui est également de forme carrée, comme on le voit bien figure 3 également.

Sur la figure 1, un écrou de fixation 55 fileté est représenté pour assurer la fixation du palier fixe 50 sur la cuve de cuisson 20. Cependant, d'autres modes de réalisation peuvent être employés, et la figure 2 représente à la place un accouplement de type quart de tour entre un écrou et une jupe 53 du palier fixe 50. On peut par ailleurs prévoir de fixer le palier fixe 50 sur le boitier 10, et non sur la cuve de cuisson 20. En conséquence, le palier fixe 50 est immobile lors de la cuisson, et arrête efficacement le plateau 30 en rotation. Le palier fixe 50 est traversé par les moyens d'entraînement et/ou la pale de brassage 40 via son trou central, si bien qu'on pourrait également qualifier le palier fixe de tube de pale.

Le plateau 30 comprend une excroissance 34, qui procure une butée pour les aliments disposés sur le plateau 30 et entrainés ou poussés par la pale de brassage 40 lorsqu'elle tourne. Le blocage en rotation du plateau 30 garantit que l'excroissance 34 sera bien immobile et arrêtera efficacement les aliments, si bien que ces derniers seront remués et retournés pour être cuits de manière homogène. Par ailleurs, il est à noter que l'excroissance 34 pourrait être solidaire de la cuve de cuisson 20.

Un épaulement 52 est également prévu sur le palier fixe 50, afin de fournir des moyens de blocage en translation du plateau 30 en coopération avec une jupe 43 de la pale de brassage 40 qui empêche le plateau 30 de remonter, selon la direction axiale représentée, qui est aussi l'axe de rotation de la pale de brassage 40. Ainsi, le palier fixe 50 participe à bloquer le plateau 30 en rotation et en translation. Selon un mode de réalisation, on peut prévoir un engagement élastique entre le plateau 30 et le palier fixe 50 (un clipsage, un poussoir à ressort), pour procurer un blocage complet (les six degrés de liberté) mais réversible du plateau 30 sur le palier fixe 50.

En conséquence, comme le montre la figure 2, un espace intermédiaire EI est ménagé entre le plateau 30 et la cuve de cuisson 20. En effet, le plateau 30 est bloqué en translation (et donc en hauteur) par l'épaulement 52 du palier fixe 50 et la jupe 43, et comprend aussi des pieds 35 qui reposent sur le fond de cuve 22 de la cuve de cuisson 20 de manière à stabiliser le plateau 30. La cuve de cuisson 20 comprend un fond de cuve 22 qui est espacé du plateau 30, si bien qu'il est possible de disposer de l'eau dans la cuve de cuisson 20, sous le plateau 30.

L'appareil de cuisson comprend des deuxièmes moyens de chauffage 72 agencés pour chauffer l'espace ménagé entre le fond de cuve 22 de la cuve de cuisson 20 et le plateau 30, par conduction et/ou rayonnement et/ou induction. On peut prévoir ici une résistance chauffante disposée sous la cuve de cuisson 20 qui chauffe cette dernière directement et l'espace intermédiaire EI en conséquence.

Des moyens d'étanchéité 80 sont prévus entre la cuve de cuisson 20 et l'épaulement 52 du palier fixe 50, au niveau de l'orifice de cuve 21. Il s'agit ici d'un joint torique, mais on peut prévoir tout autre type d'étanchéité. Ces moyens d'étanchéité permettent de faire passer les moyens d'entraînement 60 (une tête d'arbre d'entraînement) et un moyeu 41 de la pale de brassage 40 au travers du palier fixe et de l'orifice de cuve 21 sans risquer de fuites.

En conséquence, on peut disposer et faire chauffer de l'eau dans le fond de cuve 22 pour chauffer et cuire des aliments qui sont disposés sur le plateau 30, avec les deuxièmes moyens de chauffage. Ainsi de la vapeur d'eau est générée et peut permettre de cuire des aliments disposés sur le plateau 30. A cet effet, on peut prévoir un passage de communication tel que des trous de communication entre le plateau 30 et l'espace intermédiaire EI. Le plateau 30 peut être troué ou ajouré ou prévu sur sa périphérie avec un jeu important avec la cuve de cuisson 20.

La figure 3 représente une vue isométrique du plateau 30, qui comprend donc :
- un fond de plateau 32 avec au milieu l'orifice de plateau 31 (de forme carrée ici),
- un rebord 33,
- l'excroissance 34 disposée sur le rebord 33 pour ne pas entrer en interférence avec la pale de brassage 40 et son bras de pale 42,
- des pieds 35 formés par une couronne par exemple en matière plastique et rapportée sur le corps de plateau, formé typiquement par une tôle emboutie.

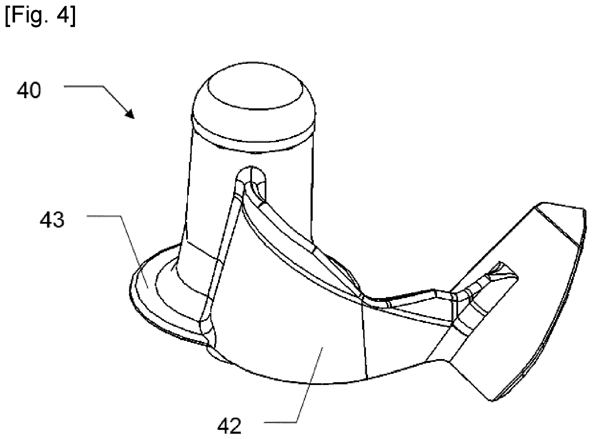

La figure 4 représente une vue isométrique de la pale de brassage 40 qui comprend un bras de pale 42 et une jupe 43 qui épouse le fond de plateau 32, une fois l'appareil de cuisson mis en configuration de cuisson. La jupe 43 permet de retenir le plateau 30, une fois la pale de brassage 40 accouplée aux moyens d'entraînement 60 (avec par exemple un clipsage, un poussoir élastique ou un verrou qui la retient sur les moyens d'entraînement 60). En conséquence, la jupe 43 fait partie des moyens de blocage en translation du plateau 30.

On notera que l'on peut :
- commander de manière distincte et indépendante les premiers moyens de chauffage 71 et les deuxièmes moyens de chauffage72, et
- mettre ou pas de l'eau dans le fond de cuve 22,
- installer ou pas la pale de brassage 40, ou à tout le moins interrompre de manière temporaire ou constante sa rotation,
   si bien que l'on peut proposer de nombreuses variantes de cuisson et de recettes avec le même appareil de cuisson.

A cet effet on peut proposer une interface homme machine (un écran tactile par exemple) pour permettre à l'utilisateur de sélectionner un type particulier d'aliments et de cuisson, et une unité de calcul de l'appareil de cuisson peut alors commander de manière adéquate et indépendante les premiers moyens de chauffage 71 et les deuxièmes moyens de chauffage 72, et la pale de brassage 40 pour effectuer la cuisson demandée.

On comprendra que diverses modifications et/ou améliorations évidentes pour l'homme du métier peuvent être apportées aux différents modes de réalisation de l'invention décrits dans la présente description sans sortir du cadre de l'invention, telle que définie par les revendications.

## Revendications

1. Appareil de cuisson d'aliments comprenant :
- un boîtier (10) comprenant un espace de cuisson,
- une cuve de cuisson (20) agencée dans l'espace de cuisson,
- un plateau (30), agencé dans la cuve de cuisson (20),
- des moyens de chauffage (71, 72), agencés pour chauffer des aliments disposés dans l'espace de cuisson,
- une pale de brassage (40), agencée pour brasser des aliments à préparer disposés dans l'espace de cuisson,
- un palier fixe (50) agencé sur la cuve de cuisson (20) pour supporter et guider en rotation la pale de brassage (40),
- des moyens d'entraînement (60), agencés pour entraîner la pale de brassage (40) au travers du palier fixe (50),
la cuve de cuisson (20) comprenant un orifice de cuve (21) pour le passage des moyens d'entraînement (60) et/ou de la pale de brassage (40),
**caractérisé :**
- **en ce que** la pale de brassage (40) est agencée pour brasser des aliments disposés sur le plateau (30),
- **en ce que** le plateau (30) comprend un orifice de plateau (31) pour le passage des moyens d'entraînement (60) et/ou de la pale de brassage (40),
- et **en ce que** l'appareil de cuisson comprend des moyens de blocage en rotation du plateau (30) autour du palier fixe (50).

2. Appareil de cuisson selon la revendication 1, comprenant des moyens de blocage en translation du plateau (30) selon une direction axiale du palier fixe (50).

3. Appareil de cuisson selon la revendication 2, dans lequel les moyens de blocage en translation comprennent un épaulement (52) sur le palier fixe (50) et/ou une jupe (43) sur la pale de brassage (40).

4. Appareil de cuisson selon l'une des revendications 1 à 3, dans lequel les moyens de blocage en rotation du plateau (30) autour du palier fixe (50) sont agencés sur le palier fixe (50).

5. Appareil de cuisson selon l'une des revendications 1 à 4, dans lequel les moyens de blocage en rotation du plateau (30) autour du palier fixe (50) comprennent un index ou une contre forme non circulaire.

6. Appareil de cuisson selon l'une des revendications 1 à 5, comprenant au moins une excroissance (34) ou une saillie destinée à procurer une butée à des aliments reçus sur le plateau (30) et entraînés en mouvement par la pale de brassage (40).

7. Appareil de cuisson selon la revendication 6, dans lequel ladite au moins une excroissance (34) ou saillie est agencée sur le plateau (30).

8. Appareil de cuisson selon l'une des revendications 1 à 7, comprenant des moyens de fixation du palier fixe (50) sur la cuve de cuisson (20) et/ou sur le boîtier (10).

9. Appareil de cuisson selon la revendication 8, dans lequel le palier fixe (50) comprend une première extrémité engagée de manière amovible avec la cuve de cuisson (20) ou le boîtier (10), selon une liaison du type encastrement, par exemple du type vis/écrou ou quart de tour.

10. Appareil de cuisson selon l'une des revendications 1 à 9, dans lequel les moyens de chauffage (71, 72) sont agencés pour générer un flux d'air de cuisson sur les aliments reçus sur le plateau (30).

11. Appareil de cuisson selon l'une des revendications 1 à 10, dans lequel les moyens de chauffage (71, 72) comprennent des premiers moyens de chauffage (71) agencés pour générer un flux d'air de cuisson sur les aliments reçus sur le plateau (30) et des deuxièmes moyens de chauffage (72) agencés pour chauffer la cuve de cuisson (20) et/ou l'espace ménagé entre le fond de la cuve de cuisson (20) et le plateau (30) par conduction et/ou rayonnement et/ou induction.

12. Appareil de cuisson selon la revendication 11, dans lequel les premiers moyens de chauffage (71) et les deuxièmes moyens de chauffage (72) sont agencés pour fonctionner de manière distincte et/ou indépendante.

13. Appareil de cuisson selon l'une des revendications 1 à 12, comprenant des moyens de support du plateau (30) sur le fond de cuve de cuisson (20).

14. Appareil de cuisson selon l'une des revendications 1 à 13, dans lequel le plateau (30) comprend au moins un passage de communication fluidique entre l'espace ménagé entre le fond de la cuve de cuisson (20) et le plateau (30) et l'espace disposé en regard d'une partie supérieure du plateau (30).

15. Appareil de cuisson selon l'une des revendications 1 à 14, dans lequel le fond de la cuve de cuisson (20) est étanche et dans lequel des moyens d'étanchéité (80) sont agencés entre le palier fixe (50) et le fond de cuve, par exemple un joint torique.

## Patentansprüche

1. Kocheinrichtung für Lebensmittel, umfassend:
- ein Gehäuse (10), umfassend einen Kochraum,
- einen Kochbehälter (20), der im Kochraum eingerichtet ist,
- eine Platte (30), die im Kochbehälter (20) eingerichtet ist,
- Heizmittel (71, 72), die eingerichtet sind, um Lebensmittel, die im Kochraum angeordnet sind, zu erhitzen,
- eine Mischschaufel (40), die eingerichtet ist, um zuzubereitenden Lebensmittel, die im Kochraum angeordnet sind, zu mischen,
- ein festes Lager (50), das auf dem Kochbehälter (20) eingerichtet ist, um die Mischschaufel (40) zu stützen und drehend zu führen,
- Antriebsmittel (60), die eingerichtet sind, um die Mischschaufel (40) durch das feste Lager (50) anzutreiben,
wobei der Kochbehälter (20) eine Behälteröffnung (21) für den Durchlass von Antriebsmitteln (60) und/oder der Mischschaufel (40) umfassen,
**dadurch gekennzeichnet,**
- **dass** die Mischschaufel (40) eingerichtet ist, um auf der Platte (30) angeordnete Lebensmittel zu mischen,
- **dass** die Platte (30) eine Plattenöffnung (31) für den Durchlass von Antriebsmitteln (60) und/oder der Mischschaufel (40) umfasst,
- und **dass** die Kocheinrichtung Mittel zur Arretierung der Drehung der Platte (30) um das feste Lager (50) herum umfasst.

2. Kocheinrichtung nach Anspruch 1, umfassend Mittel zur Arretierung der Verschiebung der Platte (30) gemäß einer axialen Richtung des festen Lagers (50).

3. Kocheinrichtung nach Anspruch 2, wobei die Mittel zur Arretierung der Verschiebung einen Absatz (52) auf dem festen Lager (50) und/oder eine Schürze (43) auf der Mischschaufel (40) umfassen.

4. Kocheinrichtung nach einem der Ansprüche 1 bis 3, wobei die Mittel zur Arretierung der Drehung der Platte (30) um das feste Lager (50) herum auf dem festen Lager (50) eingerichtet sind.

5. Kocheinrichtung nach einem der Ansprüche 1 bis 4, wobei die Mittel zur Arretierung der Drehung der Platte (30) um das feste Lager (50) herum einen Index oder eine nichtkreisförmige Gegenform umfassen.

6. Kocheinrichtung nach einem der Ansprüche 1 bis 5, umfassend mindestens einen Auswuchs (34) oder einen Vorsprung, der dazu vorgesehen ist, einen Anschlag für auf der Platte (30) aufgenommene und von der Mischschaufel (40) in Bewegung versetzte Lebensmittel bereitzustellen.

7. Kocheinrichtung nach Anspruch 6, wobei der mindestens eine Auswuchs (34) oder Vorsprung auf der Platte (30) eingerichtet ist.

8. Kocheinrichtung nach einem der Ansprüche 1 bis 7, umfassend Mittel zum Befestigen des festen Lagers (50) auf dem Kochbehälter (20) und/oder auf dem Gehäuse (10).

9. Kocheinrichtung nach Anspruch 8, wobei das feste Lager (50) ein erstes Ende umfasst, das gemäß einer Verbindung vom Einlasstyp, zum Beispiel des Typs Schraube/Schraubenmutter oder Vierteldrehung, auf abnehmbare Weise in den Kochbehälter (20) oder das Gehäuse (10) eingreift.

10. Kocheinrichtung nach einem der Ansprüche 1 bis 9, wobei die Heizmittel (71, 72) eingerichtet sind, um einen Kochluftstrom auf die Lebensmittel, die auf der Platte (30) aufgenommen sind, zu erzeugen.

11. Kocheinrichtung nach einem der Ansprüche 1 bis 10, wobei die Heizmittel (71, 72) erste Heizmittel (71), die eingerichtet sind, um einen Kochluftstrom auf die Lebensmittel, die auf der Platte (30) aufgenommen sind, zu erzeugen, und zweite Heizmittel (72) umfassen, die eingerichtet sind, um den Kochbehälter (20) und/oder den zwischen dem Boden des Kochbehälters (20) und der Platte (30) eingerichteten Raum durch Konduktion und/oder Strahlung und/oder Induktion zu erhitzen.

12. Kocheinrichtung nach Anspruch 11, wobei die ersten Heizmittel (71) und die zweiten Heizmittel (72) eingerichtet sind, um auf unterschiedliche und/oder unabhängige Weise zu arbeiten.

13. Kocheinrichtung nach einem der Ansprüche 1 bis 12, umfassend Mittel zum Stützen der Platte (30) auf dem Boden des Kochbehälters (20).

14. Kocheinrichtung nach einem der Ansprüche 1 bis 13, wobei die Platte (30) mindestens einen Durchlass zur strömungstechnischen Verbindung zwischen dem zwischen dem Boden des Kochbehälters (20) und der Platte (30) eingerichteten Raum und dem einem oberen Teil der Platte (30) zugewandten Raum umfasst.

15. Kocheinrichtung nach einem der Ansprüche 1 bis 14, wobei der Boden des Kochbehälters (20) dicht ist und wobei Dichtungsmittel (80) zwischen dem festen Lager (50) und dem Boden des Behälters eingerichtet sind, zum Beispiel ein Abschlussring.

## Claims

1. Food cooking appliance comprising:
- a casing (10) comprising a cooking space,
- a cooking vessel (20) arranged in the cooking space,
- a plate (30), arranged in the cooking vessel (20),
- heating means (71, 72) arranged to heat food disposed in the cooking space,
- a mixing blade (40), arranged to mix food to be prepared disposed in the cooking space,
- a fixed level (50) arranged on the cooking vessel (20) to support and rotatably guide the mixing blade (40),
- drive means (60), arranged to drive the mixing blade (40) through the fixed level (50),
the cooking vessel (20) comprising a vessel orifice (21) for the passage of drive means (60) and/or the mixing blade (40),
**characterised:**
- **in that** the mixing blade (40) is arranged to mix food arranged on the plate (30),
- **in that** the plate (30) comprises a plate orifice (31) for the passage of drive means (60) and/or the mixing blade (40),
- and **in that** the cooking appliance comprises means for rotatably blocking the plate (30) around the fixed level (50).

2. Cooking appliance according to claim 1, comprising means for translationally blocking the plate (30) in an axial direction of the fixed level (50).

3. Cooking appliance according to claim 2, wherein the translational blocking means comprise a shoulder (52) on the fixed level (50) and/or a skirt (43) on the mixing blade (40).

4. Cooking appliance according to one of claims 1 to 3, wherein the means for rotatably blocking the plate (30) around the fixed level (50) are arranged on the fixed level (50).

5. Cooking appliance according to one of claims 1 to 4, wherein the means for rotatably blocking the plate (30) around the fixed level (50) comprise an index or a non-circular counter.

6. Cooking appliance according to one of claims 1 to 5, comprising at least one excrescence (34) or a projection intended to provide an abutment to food received on the plate (30) and movably driven by the mixing blade (40).

7. Cooking appliance according to claim 6, wherein said at least one excrescence (34) or projection is arranged on the plate (30).

8. Cooking appliance according to one of claims 1 to 7, comprising means for fixing the fixed level (50) on the cooking vessel (20) and/or on the casing (10).

9. Cooking appliance according to claim 8, wherein the fixed level (50) comprises a first end removably engaged with the cooking vessel (20) or the casing (10), according to housing-type connection, for example of the screw/nut or quarter-turn type.

10. Cooking appliance according to one of claims 1 to 9, wherein the heating means (71, 72) are arranged to generate a cooking air flow on the food received on the plate (30).

11. Cooking appliance according to one of claims 1 to 10, wherein the heating means (71, 72) comprise first heating means (71) arranged to generate a cooking air flow on the food received on the plate (30) and second heating means (72) arranged to heat the cooking vessel (20) and/or the space arranged between the bottom of the cooking vessel (20) and the plate (30) by conduction and/or radiation and/or induction.

12. Cooking appliance according to claim 11, wherein the first heating means (71) and the second heating means (72) are arranged to operate distinctly and/or independently.

13. Cooking appliance according to one of claims 1 to 12, comprising means for supporting the plate (30) on the cooking vessel (20) bottom.

14. Cooking appliance according to one of claims 1 to 13, wherein the plate (30) comprises at least one fluid communication passage between the space arranged between the bottom of the cooking vessel (20) and the plate (30) and the space disposed facing an upper part of the plate (30).

15. Cooking appliance according to one of claims 1 to 14, wherein the bottom of the cooking vessel (20) is sealed and wherein the sealing means (80) are arranged between the fixed level (50) and the vessel bottom, for example an O-ring.
